(19) Europäisches Patentamt / European Patent Office / Office européen des brevets

(11) **EP 1 574 990 B1**

(12) **FASCICULE DE BREVET EUROPEEN**

(45) Date de publication et mention
de la délivrance du brevet:
**01.11.2017 Bulletin 2017/44**

(51) Int Cl.:
***G06N 5/02*** (2006.01)

(21) Numéro de dépôt: **04293174.1**

(22) Date de dépôt: **30.12.2004**

(54) **Procédé d'édition d'un modèle explicatif**

Verfahren zur Editierung eines Erklärungsmodells

Method of editing an explanation model

(84) Etats contractants désignés:
**AT BE BG CH CY CZ DE DK EE ES FI FR GB GR
HU IE IS IT LI LT LU MC NL PL PT RO SE SI SK TR**

(30) Priorité: **31.12.2003 US 533231 P**

(43) Date de publication de la demande:
**14.09.2005 Bulletin 2005/37**

(73) Titulaire: **Dassault Systèmes
78140 Vélizy-Villacoublay (FR)**

(72) Inventeur: **Kerisit, Jean-Marc
75002 Paris (FR)**

(74) Mandataire: **Brunelli, Gérald
Marks & Clerk France
Immeuble Visium
22, avenue Aristide Briand
94117 Arcueil Cedex (FR)**

(56) Documents cités:
- CUESTA S R ET AL: "A visual approach for fuzzy rule induction" EMERGING TECHNOLOGIES AND FACTORY AUTOMATION, 2003. PROCEEDINGS. ETFA '03. IEEE CONFERENCE SEPT. 16-19, 2003, PISCATAWAY, NJ, USA,IEEE, vol. 2, 16 septembre 2003 (2003-09-16), pages 761-767, XP010670999 ISBN: 978-0-7803-7937-4
- WESLEY ROMÃO, ALEX A. FREITAS, ROBERTO C.S. PACHECO: "A Genetic Algorithm for discovering Interesting Fuzzy Prediction Rules: applications to science and technology data" PROCEEDINGS OF THE GENETIC AND EVOLUTIONARY COMPUTATION CONFERENCE, 31 décembre 2002 (2002-12-31), pages 343-350, XP002513009

EP 1 574 990 B1

**Description**

La présente invention concerne le domaine de l'analyse et de la description de phénomènes observables, en particulier pour la construction et l'édition d'un modèle explicatif, i.e. constitué d'un ensemble de règles explicatives. Le dit procédé intègre en particulier au sein d'un éditeur graphique :

- Une capacité de mise à jour, de visualisation et d'amélioration d'indicateurs de qualité et de validité des règles basés sur leur évaluation sur un jeu de données,
- Une capacité d'apprentissage permettant d'obtenir les dites règles en intégrant des contraintes et/ou des objectifs de qualité.

Dans l'histoire de la modélisation de la connaissance, l'accent a souvent été davantage porté sur les modèles de prédiction que sur les modèles explicatifs. Sans doute parce qu'il existe de nombreuses techniques permettant de prédire dont les modèles sous-jacents sont inintelligibles (par exemple, les réseaux de neurones). On peut donc penser que si les modèles explicatifs permettent parfois de prédire (mais encore faut-il nuancer ce propos car un modèle explicatif se doit d'être simple pour être intelligible, et la simplification à laquelle procède cette modélisation a donc souvent pour effet d'affaiblir ses capacités prédictives), la réciproque (à savoir : que les modèles prédictifs permettent d'expliquer) n'est pas vraie.

On connaît dans l'état de la technique une solution décrite dans le brevet « Method for generating predictive models in a computer system - Patent Number 5,692,107" qui permet de générer des modèles prédictifs en s'appuyant sur des moteurs d'analyse « top-down et bottom-up » et une base de connaissances.

Cette solution ne constitue en fait pas une solution pour la construction d'un modèle explicatif, mais seulement une solution pour la construction d'un modèle prédictif. Une règle explicative constitue une connaissance individuelle autonome dont la valeur se définit par le calcul d'indicateurs de qualité (par exemple : pureté, robustesse, densité...) calculables sur un échantillon supposé représentatif des données, alors que les règles prédictives n'ont pas de valeur individuellement : elles constituent un modèle global qui permet de prédire la valeur d'un attribut cible (goal attribute) pour des valeurs fixées des autres attributs. La qualité d'un modèle prédictif est globale et peut être exprimée comme la coïncidence entre la prédiction et la valeur constatée sur des échantillons statistiquement représentatifs.

Dans ce brevet n° 5.692.107, il est fait une différence explicite entre connaissance à valider (expressed knowledge) et module de prédiction par règles basé sur un « Target Data Set » modifié par l'utilisateur. La courante invention ne considère quant à elle aucune connaissance préalable similaire.

Par ailleurs, le procédé breveté suppose le choix explicite du module d'induction par l'utilisateur parmi un ensemble de modules d'analyse bottom-up, ce qui n'est nullement le cas de la présente invention.

Le but de l'invention est de proposer une solution remédiant à ces inconvénients qui permette effectivement de formuler et mettre au point des règles explicatives.

L'invention concerne selon son acception la plus générale un procédé d'édition d'un modèle explicatif, comportant :

- une étape de production du modèle explicatif sous la forme d'un ensemble de règles, lesdites règles étant représentées par :

  ◦ des combinaisons logiques de prémisses élémentaires, chaque prémisse élémentaire consistant en une restriction du domaine d'une variable,
  ◦ et une combinaison logique de conclusions élémentaires, chaque conclusion élémentaire consistant également en une restriction du domaine d'une variable,

- le procédé comportant en outre une étape de modification d'une partie au moins des règles initiales pour déterminer un nouveau modèle explicatif caractérisé en ce que l'étape de modification de règles consiste :

  ◦ à modifier les restrictions de domaine desdites variables,
  ◦ et à calculer les indicateurs de qualité de la règle par application du jeu de règles modifié sur une source de données appelée base d'exemples.

Avantageusement, lesdits indicateurs de qualité sont constitués par une combinaison de plusieurs indicateurs élémentaires de qualité parmi l'ensemble suivant :

- indicateur de taille de règle : caractérise le nombre d'exemples de la base d'exemples qui vérifient les prémisses de la règle

- indicateur de volume de règle : caractérise le volume du sous-espace support de la règle
- indicateur de pureté de règle : caractérise la proportion parmi les exemples qui vérifient les prémisses de la règle, de ceux qui vérifient aussi ses conclusions
- indicateur de robustesse : caractérise la résistance de la règle aux changements

Selon une variante, lesdits indicateurs de qualité sont définis par l'utilisateur au moyen d'une interface graphique.

Selon un mode de réalisation avantageux, le procédé comporte une opération d'amélioration d'une règle consistant à maximiser un ou plusieurs indicateurs de qualité par la détermination optimale du domaine de variation d'une des variables des prémisses de ladite règle.

Selon des variantes de mise en oeuvre, le procédé selon l'invention comporte :

- une opération d'amélioration d'une règle consistant à maximiser un ou plusieurs indicateurs de qualité par la détermination optimale du domaine de variation des variables des prémisses de ladite règle
- une opération d'amélioration d'une règle consistant à ajouter au moins une prémisse additionnelle dans le but de maximiser un ou plusieurs indicateurs de qualité par la détermination optimale du domaine de variation des variables des prémisses de ladite règle
- une opération d'amélioration d'une règle consistant à supprimer au moins une prémisse de ladite règle dans le but de maximiser un ou plusieurs indicateurs de qualité par la détermination optimale du domaine de variation des variables des prémisses de ladite règle
- une étape de visualisation d'une représentation graphique du domaine de variation des variables, et de symboles graphiques représentatifs des données de la source de référence et du résultat de l'application de la règle à la base d'exemples, et une étape de modification des domaines des variables par positionnement graphique de marqueurs commandés par une action sur un périphérique de pointage.

Selon une autre variante, le procédé comporte en outre une étape de :

- recalcul en temps réel d'au moins un indicateur de qualité
- et de visualisation graphique dudit indicateur de qualité.

Selon une autre variante, il comporte en outre une étape de visualisation d'une représentation graphique du domaine de l'espace constitué par la projection des indicateurs de qualité, et de positionnement dans ledit espace de symboles graphiques représentatifs des règles en fonction des indicateurs correspondant à chacune des règles.

Avantageusement, il comporte en outre des moyens de sélection et de visualisation d'une desdites règles à l'aide d'un périphérique de pointage.

Selon un mode de mise en oeuvre particulier, le procédé comporte en outre une étape de construction d'une règle supplémentaire par la représentation graphique d'un ensemble de règles et de calcul d'une règle supplémentaire résultante d'une combinaison ensembliste de plusieurs règles.

De préférence, la sélection de deux règles à combiner comporte une opération de représentation graphique des règles et des valeurs des indicateurs de qualité correspondant à la combinaison de chaque couple de règles.

Selon une variante, l'étape de construction des règles consiste à élaborer l'ensemble des règles par apprentissage sur tout ou partie de la base d'exemples, en tenant compte de contraintes exprimées sur un ou plusieurs indicateurs de qualité et de validité.

Avantageusement, les règles élaborées portent sur certaines variables seulement parmi l'ensemble des variables possibles.

De préférence, les règles élaborées prennent en compte des contraintes exprimées sur les domaines de variation des variables.

Selon une variante, les règles élaborées optimisent un ou plusieurs indicateurs de qualité et de validité.

Selon un mode de réalisation particulier, les domaines de variation des variables apparaissant en prémisse d'une règle sont visualisés sous forme d'histogrammes

Selon un autre exemple de mise en oeuvre, les domaines de variation des variables apparaissant en prémisse d'une règle sont modifiables par action du périphérique de pointage sur lesdits histogrammes

L'invention sera mieux comprise à la lecture de la description qui suit, se référant à un exemple de réalisation non limitatif, en référence aux figures annexées :

- la figure 1 est un schéma descriptif illustrant le procédé selon la présente invention ;
- la figure 2 illustre en pseudo code la détermination automatique de la granularité ; et
- les figures 3, 4 et 5 illustrent des écrans représentatifs du module « éditeur de règles ».

**Description de l'implémentation**

**Architecture informatique**

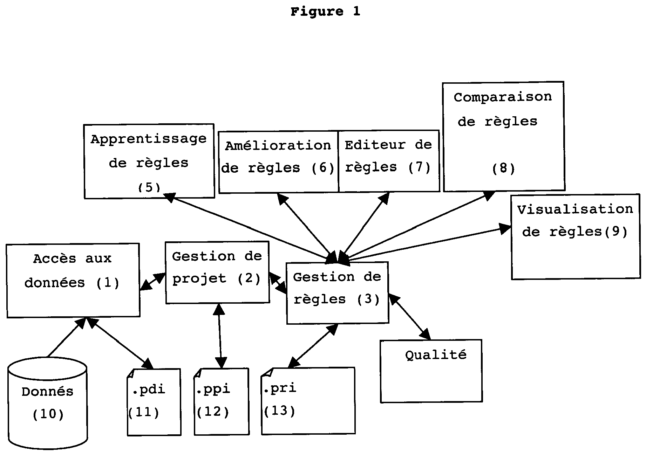

Le système décrit est articulé autour de l'architecture logicielle dont un exemple est représenté en figure 1.
Elle est composée de:

- un module d'accès aux données (1)
- un module de gestion de projets (2)
- un module de gestion de règles (3)
- un module de calcul des valeurs d'indicateurs de qualité d'une règle (4)
- un module d'apprentissage automatique (5)
- un module d'amélioration de règles (6)
- un module éditeur de règles (7)
- un module de comparaison des règles (8)
- un module de visualisation d'une règle (9).

**Module d'accès aux données (1)**

Ce module d'accès aux données (1) est destiné à la lecture et à l'enregistrement des données historiques sous forme de fichier textuel plat (format standard .csv), de fichier Excel ou de requête ODBC à une base de données. Ces données historiques (10) sont les informations correspondant aux exemples (aussi appelés lignes ou points) à partir desquels vont être créées et validées les règles. Chaque ligne renseigne les valeurs des variables (aussi appelées colonnes). Ces variables peuvent être de nature ordonnée (par exemple, prenant des valeurs numériques) ou non ordonnées (par exemple, prenant des valeurs discrètes textuelles).
Ces informations sont par exemple constituées par une table externe comprenant pour chaque exemple des valeurs de variables expérimentales ainsi qu'une variable de sortie dont on cherche à construire le modèle explicatif. Cette variable de sortie est, dans l'exemple décrit à titre non limitatif, une variable non ordonnée. Dans le cas d'une application portant sur l'analyse de réglage d'une chaîne de production, cette table comportera, pour une série de tests, les valeurs des réglages de chaque équipement de la chaîne ainsi que la valeur d'indicateurs de performance ou de mesure collectés sur la chaîne de production.
Son interface à l'utilisateur propose le choix entre ces options et pour chacune d'entre elle demande la saisie des paramètres correspondants (par exemple : nom et chemin d'accès du fichier, etc...). Ce module d'accès aux données (1) réalise l'importation de données historiques (10) selon des formats disparates, pour les enregistrer en mémoire ou sous forme d'un fichier d'exemples (11) dans un format exploitable par les autres modules.
A chaque projet est ainsi associée une base d'exemples spécifique, optionnellement enregistrée sous la forme d'un fichier (11) construit par le module d'accès aux données (1), avec une extension spécifique, par exemple « .pdi ».

**Module de gestion de projets (2)**

Ce module de gestion de projets (2) accède aux données historiques (10) par l'intermédiaire du module d'accès aux données (1), ainsi qu'aux règles par l'intermédiaire du module de gestion de règles (3), pour enregistrer les projets de travail sous forme de fichiers « projets » (12) présentant un format spécifique, par exemple « .ppi ».

**Module de gestion de règles (3)**

Ce module de gestion de règles (3) met à disposition des autres modules l'ensemble des règles disponibles, provenant du module d'édition de règles (7), ou du module d'apprentissage automatique (5) et maintient la cohérence des règles modifiées par les modules d'amélioration (6), d'édition de règles (7) et de visualisation d'une règle (9). Il maintient pour chacune des règles la cohérence des indicateurs de qualité en appelant le module de calcul des valeurs d'indicateurs de qualité (4).
Ce module met également à disposition du module de comparaison des règles (8) l'ensemble de ces règles.
Dans l'exemple d'implémentation, une règle se définit précisément par :

- une conjonction de prémisses élémentaires, chaque prémisse élémentaire consistant en une restriction du domaine d'une variable :

    ◦ sous forme d'un intervalle de variation pour une variable ordonnée

∘ sous forme d'une valeur particulière pour une variable non ordonnée

- et une conclusion élémentaire consistant également en une restriction du domaine d'une variable, ladite variable devant être discrète (non ordonnée).

Le module de gestion de règles réalise l'enregistrement de ces règles sous forme d'un fichier de règles (13), présentant un format spécifique, par exemple « .pri ».

## Module de calcul des valeurs d'indicateurs de qualité d'une règle (4)

Ce module permet de calculer à partir d'une règle telle que produite par le module (3) et d'un jeu de données tel que produit par le module (1) un ensemble de valeurs d'indicateurs de qualité pour cette règle.

Certains critères de qualité des règles se définissent par rapport à une représentation géométrique des règles qui nécessitent quelques explications préliminaires. On entend par hyperespace un espace à N dimensions, N représentant le nombre des variables non compris la variable de sortie. Nous appelons hypercube un sous-espace de l'hyperespace (potentiellement l'espace lui-même), délimité par des plages de valeurs pour chaque variable. A chaque règle correspond un hypercube que nous appellerons hypercube de la règle, qui se définit par la restriction de l'espace suivant les contraintes exprimées en prémisses de cette règle. A chaque règle correspond un ensemble de points parmi l'ensemble de tous les points de la base d'exemples, appelé support de la règle, qui se définit comme l'ensemble des points qui appartiennent à l'hypercube de la règle.

Les critères de qualité des règles se calculent comme suit :

### Pureté

Le degré de pureté d'une règle est déterminé par le rapport du nombre de points de la règle respectant cette règle (i.e. ayant pour valeur de la valeur de sortie la valeur sélectionnée en conclusion de la règle), sur le nombre total de points de la règle considérée.

Par exemple, si une règle concluant sur la valeur « bon » pour la variable de sortie, contient 5 points dont 4 ont pour valeur de la variable de sortie la valeur « bon » et 1 point la valeur « mauvais », la pureté de la règle est de 4/5, soit 80%.

### Pureté relative

La pureté relative Pr se calcule comme une fonction linéaire par morceaux de la pureté p de la règle :

Soit P la pureté de tout l'espace par rapport à la classe de sortie de la règle,

$$\mathrm{Si}\ p\ <P,$$

$$\mathrm{Pr}(p)\ =\ 0$$

Sinon,

$$\mathrm{Pr}(p) = \frac{(p - P)}{(1 - P)}$$

### Complexité

La complexité se calcule comme le nombre de prémisses de la règle

### Taille

La taille d'une règle se calcule comme le nombre de points de la règle

Taille relative

La taille relative se calcule comme la taille de la règle divisée par la taille de l'espace tout entier.

Volume

Le volume d'une règle se calcule comme le produit des amplitudes suivant chaque dimension de l'hypercube de variation des variables des points analysés. Pour les variables discrètes (non ordonnées), l'amplitude se calcule comme l'inverse du nombre de modalités prises par cette variable sur toute la base d'exemples.

Volume relatif

Le volume relatif se calcule comme le volume de la règle divisé par le volume de l'espace tout entier.

Densité

La densité d'une règle se calcule comme le rapport de sa taille relative sur son volume relatif.

Robustesse

La robustesse d'une règle est un indicateur statistique prenant en compte la probabilité selon laquelle cette règle pourrait être le résultat du pur hasard (calcul basé sur la loi hypergéométrique). Intuitivement, plus cette probabilité que la règle existe est élevée, moins grande est la robustesse.
La robustesse se calcule comme suit :

$$\text{Robustesse} = 1 - \sqrt[p]{\frac{C_N^k \times C_{\overline{N}}^{n-k}}{C_{N+\overline{N}}^n}}$$

où :

n : nombre d'exemples appartenant à la règle
k : nombre d'exemples appartenant à la règle et bien classés (i.e. ayant comme valeur de la valeur de sortie la valeur apparaissant dans la conclusion de la règle)
N : nombre d'exemples total (dans tout l'espace) de la même classe que la règle
$\overline{N}$ : nombre d'exemples total d'autres classes que celle de la règle
p : nombre de prémisses de la règle (ou complexité, comme expliqué ci-dessus)

Autres indicateurs

Toute combinaison des indicateurs précédents peut constituer un nouvel indicateur.

**Module d'apprentissage automatique (5)**

Le module d'apprentissage (5) exploite la totalité ou une partie seulement des données historiques (10). Chaque ligne de la table des données historiques (10) sera qualifié de « point » dans ce qui suit. La finalité du module d'apprentissage est de fabriquer des règles qui concluent sur une variable de sortie pour laquelle on cherche à construire un modèle applicatif, et qui soient d'une qualité suffisante par rapport à des critères énoncés par l'utilisateur mettant en jeu les différents indicateurs définis ci-dessus. Par exemple, l'algorithme d'apprentissage est utilisé pour définir des règles d'une taille et d'un volume suffisants, d'une bonne densité, d'une bonne robustesse et/ou d'une bonne sensibilité. On appelle dans ce qui suit classe de sortie toute modalité prise par ladite variable de sortie. L'algorithme prend en paramètres externes :

- un seuil de pureté minimale : *minPurity*
- un seuil de taille minimale : *minSize*

- un paramètre de redondance : *redondancy*

Etape 1 : Initialisation

En préliminaire à l'exécution du corps de l'algorithme, il est nécessaire de déterminer un certain nombre d'informations utiles ensuite : calcul des seuils d'impureté par classe pour chaque classe de sortie, détermination du seuil de redondance, détermination de *basisSize.*

**Calcul des seuils d'impureté par classe**

Pour chaque classe, on calcule sa « domination » comme étant le rapport du nombre de points de cette classe au nombre total de points de classes différentes. Si la domination d'une classe est supérieure ou égale à 1 (i.e. la classe contient plus de la moitié des points), le seuil d'impureté par classe de ladite classe est fixé au complément à 1 du rapport entre le seuil de pureté minimale (*minPurity*) et la domination de ladite classe :

$$classImpurityThreshold = 1 - \frac{minPurity}{domination}$$

Sinon, dans le cas d'une classe minoritaire, le seuil d'impureté par classe de ladite classe est fixé au complément à 1 du seuil de pureté minimale (*minPurity*) :

$$classImpurityThreshold = 1 - minPurity$$

**Calcul du seuil de redondance**

Le seuil de redondance se définit comme le produit du paramètre de redondance par le nombre de points.

**Détermination de la granularité (*basisSize*)**

La granularité est la cardinalité des ensembles de points à considérer dans la première étape de l'algorithme. Ce calcul de la granularité (*basisSize*) est extrêmement important car il permet d'assurer une bonne applicabilité de l'algorithme malgré la variété des configurations de données possibles. En effet, comme il sera expliqué plus loin, l'algorithme d'apprentissage, dans sa phase de généralisation, simplifie les règles. Ainsi, plus la granularité est élevée, plus les prémisses sont déjà généralisées, et mènent donc a priori à des règles simples (avec un faible coût de calcul). A l'opposé, plus ces hypothèses sont généralisées, plus faible est la probabilité que ces prémisses soient vérifiées sur la base d'exemples (basis construction success faible). La détermination automatique de la granularité consiste donc à trouver un compromis entre granularité élevée (temps de calcul réduit) et BCS (basis construction success) correct.

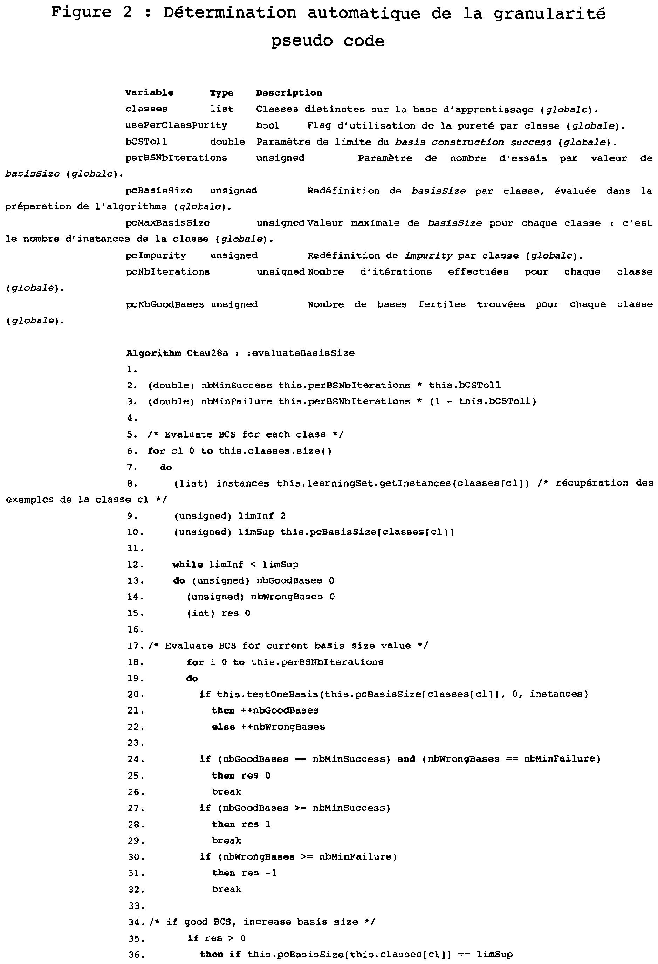

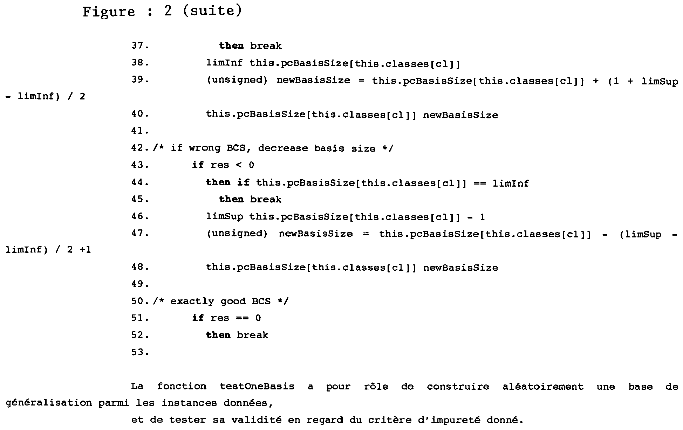

La figure 2 présente le pseudo code d'implémentation de cette détermination.

Etape 2 : Fabrication des règles

La deuxième étape consiste à fabriquer des ensembles de points (ensembles de lignes, chaque ligne correspondant à un exemple de la base historique (10)) ensembles qui seront appelés « règles candidates ». Un point sera dit « couvert » par une règle candidate s'il appartient à cette règle candidate, il sera dit « suffisamment couvert » si le nombre de règles candidates qui le « couvrent » est supérieur ou égal au seuil de « redondance ».
L'étape de fabrication des règles candidates consiste en une itération de fabrication de règles une par une à partir d'une nouvelle « graine » à chaque itération.

**Sous-étape 2.1 : Choix d'une graine et critère d'arrêt d'itération**

Chaque règle candidate est fabriquée à partir d'un premier point appelé « graine » qui est pris au hasard parmi les points les moins couverts et non encore « suffisamment couverts ». La valeur de la variable de sortie pour ce point détermine la classe de sortie de la règle en fabrication. Un même point ne pourra pas être choisi comme graine plus d'un certain nombre de fois (paramètre de seuil d'acharnement). Si le minimum pour tous les points du nombre de règles candidates couvrant le point, est supérieur ou égal au seuil de redondance, l'itération est arrêtée et la troisième étape de l'algorithme est enclenchée. De même, si le seuil d'acharnement est dépassé pour tous les points, l'itération est arrêtée et on passe à la troisième étape de l'algorithme.

**Sous-étape 2.2 : Construction d'une règle candidate**

Pour chaque graine sélectionnée, on sélectionne un nombre (égal à *basisSize*-1) d'autres points distincts, de manière à constituer un ensemble de *basisSize* points. Ces points sont choisis parmi les points dits compatibles avec la graine et compatibles entre eux (cette notion de compatibilité entre points est calculée et maintenue dans une matrice de compatibilité qui est mise à jour au fur et à mesure de l'exécution de l'algorithme, comme spécifié plus loin). Pour ce faire, la règle candidate est augmentée par itérations successives d'un point à chaque fois, choisi comme le plus compatible avec les points déjà choisis (graine comprise), c'est-à-dire maximisant la somme des coefficients de compatibilité aux points déjà choisis. Ensuite, tous les points qui appartiennent à l'hypercube enveloppe de la règle candidate (i.e. le plus petit hypercube contenant les points de cette règle candidate) sont rajoutés à la règle candidate. On évalue alors un indicateur dit d' « impureté par classe » de cette règle candidate (proportion de points de la règle candidate ayant une classe de sortie différente de la classe de sortie, par rapport au nombre total de points couverts par la règle candidate). Si cet indicateur est inférieur au seuil d'impureté par classe de la classe de sortie, la règle candidate est abandonnée, sinon, elle est ajoutée à l'ensemble des règles candidates retenues. La matrice de compatibilité est mise à jour en conséquence, comme spécifié plus loin.

La matrice de compatibilité permet de maintenir dynamiquement une information de compatibilité entre points deux à deux. Elle est initialisée à 1 pour tous les couples de points, à 0,95 sur sa diagonale. Quand une règle candidate est conservée après évaluation de l'indicateur d'impureté par classe, l'ensemble des coefficients de compatibilité entre couples de points de la règle candidate est multiplié par un facteur 0,99. Quand elle est refusée, l'ensemble des coefficients de compatibilité entre couples de points de la règle candidate est multiplié par un facteur égal à 0,95 si la taille de la règle candidate est strictement supérieure à 2, et 0 sinon.

**Sous-étape 2.3 : Elargissement/Généralisation d'une règle**

Chaque règle, lorsqu'elle est retenue, est transformée lors d'une étape d'élargissement et de généralisation.
Le principe de l'élargissement est de tenter d'étendre les limites de variation des variables continues apparaissant dans les prémisses de la règle, tout en maintenant les indicateurs de qualité dans les limites fixées.
Le principe de la généralisation est de tenter de supprimer une ou plusieurs prémisses, tout en maintenant les indicateurs de qualité dans les limites fixées.
Cette phase d'élargissement/généralisation peut se faire par exemple par une alternance d'élargissements et de généralisations.

Etape 3 : Combinaison des règles

Enfin, la troisième étape consiste à combiner les règles obtenues afin d'en réduire le nombre, selon la technique dite « frequent item set » dont le principe général est bien connu dans l'état de la technique.

**Module d'amélioration de règles (6)**

Ce module met en oeuvre un algorithme utilisé pour adapter une règle sous contraintes de pureté, volume, taille, etc.... Ce module réalise un traitement consistant à modifier la règle sélectionnée de façon à privilégier un ou plusieurs indicateurs de qualité, par la détermination optimale du domaine de variation des variables des prémisses de ladite règle, ou par l'ajout ou la suppression de variables. La variation du domaine d'une variable procède par élargissement et/ou par réduction du domaine.
On distingue le traitement des variables ordonnées où la notion d'élargissement et de réduction du domaine est banale, des variables non ordonnées. Dans le cas des variables non ordonnées, l'élargissement se fait en une seule étape par suppression du prémisse ; la réduction d'une variable non ordonnée se fait elle aussi en une seule étape et ne peut intervenir que sur les prémisses indéfinis (variable absente de la règle). Elle consiste à choisir une valeur au hasard parmi les valeurs existantes pour cette variable dans la base de points.
L'algorithme permet de proposer plusieurs améliorations possibles.
Dans une première étape, il parcourt les prémisses une à une et pour chacune, teste si la qualité de la règle peut être améliorée par élargissement ou réduction du domaine de la variable correspondante.
Dans une deuxième étape, il parcourt une par une l'ensemble des variables ne figurant pas dans la règle et pour chacune, teste si la qualité de la règle peut être améliorée par réduction du domaine de la variable correspondante.
La troisième étape procède en essais d'élargissement/réduction suivant une exploration stochastique reprenant la sous-étape 2.3 de l'algorithme du module d'apprentissage (5), telle que détaillée ci-dessus.

**Module éditeur de règles (7)**

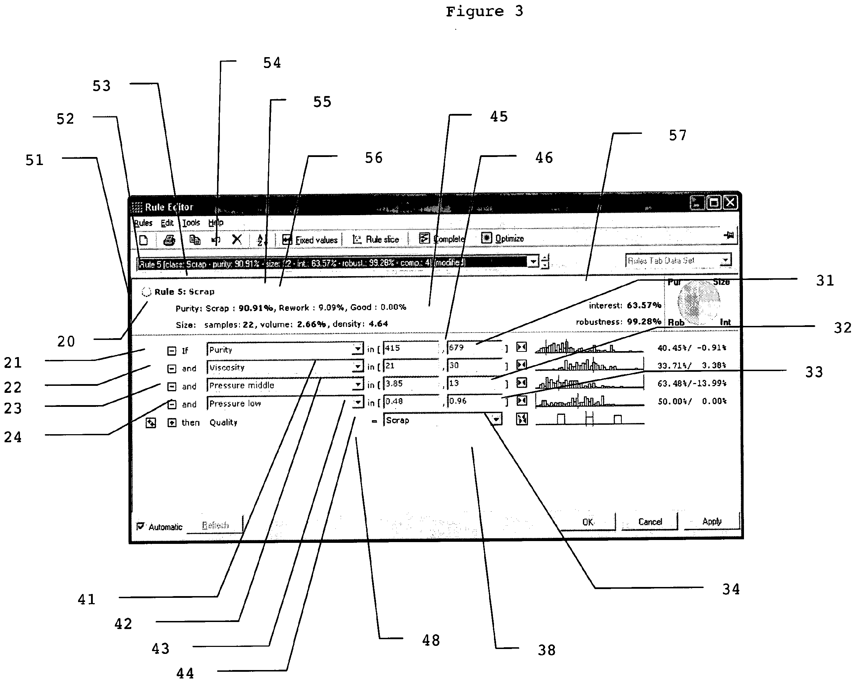

Ce module (7) constitue une interface graphique utilisateur permettant à l'utilisateur de manipuler les règles et d'apporter des modifications. La figure 3 représente une copie d'écran d'un exemple de mise en oeuvre de ce module. L'utilisateur peut sélectionner une règle et modifier le domaine de variation des variables. Le module (7) recalcule en temps réel les indicateurs de qualité de la règle et affiche le résultat des nouveaux indicateurs de qualité résultant des modifications imposés par l'utilisateur. Le résultat des modification déterminées par l'utilisateur se traduit également par une variation de représentation graphique des indicateurs de qualité, sous la forme de variation de la couleur par exemple.

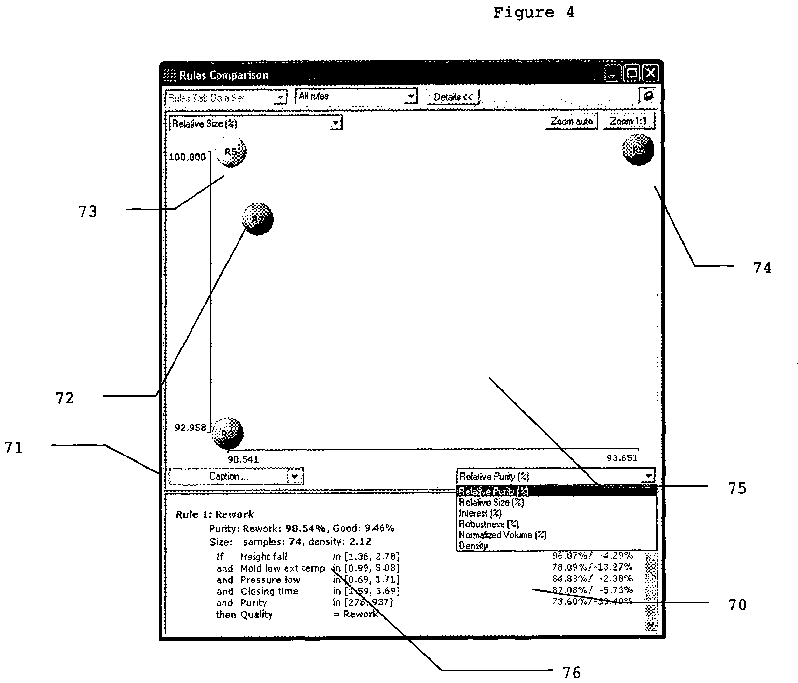

La figure 4 illustre un exemple d'écran correspondant à ce module. La règle est sélectionnée par l'intermédiaire d'une liste déroulante (20). Les domaines de variation pour chacune des variables (21 à 24) exploités par la règle sélectionnée apparaissent sous une forme graphique (31 à 34) et sous forme numérique (41 à 44).

Ces éléments sont modifiables par l'utilisateur, par exemple par déplacement des indicateurs (45, 46) représentant les limites de l'intervalle de variation sur la base duquel ont été calculés les indicateurs de qualité représentés par des valeurs numériques (51 à 56) ainsi que sous forme d'une représentation graphique (57). Dans cet exemple, la valeur de chacun des indicateurs est représentée par des codes de couleur.

La valeur de sortie est une variable discrète dans l'exemple présent. Elle est représentée sous forme graphique (38) et sous forme textuelle (48) dans une liste déroulante. Cette variable de sortie peut également être modifiée par l'utilisateur par sélection dans la liste pour par pointage d'une des valeurs discrètes représentées sous forme graphique.

La modification de l'une des valeurs ou de l'un des intervalles provoque le recalcule des indicateurs de qualité et l'affichage des nouveaux indicateurs correspondant aux contraintes imposés par l'utilisateur.

L'accès aux fonctionnalités du module d'amélioration des règles s'effectue par l'intermédiaire de boutons (61 à 64), ouvrant une fenêtre permettant d'activer l'algorithme d'amélioration correspondant, après spécification par l'utilisateurs des objectifs en terme de priorité et de valeur de seuil des indicateurs de contrainte pris en compte.

**Module de comparaison des règles**

Ce module permet de positionner les règles en fonction de la valeur de deux indicateurs de qualité choisis parmi l'ensemble des indicateurs de qualité. La figure 4 représente une copie d'écran d'un exemple de mise en oeuvre de ce module. Le choix des indicateurs est opéré par l'intermédiaire d'une liste déroulante (70). Chaque règle (71 à 74) est positionnée sur un graphe (75) dont les axes correspondent aux indicateurs de qualité choisis. La désignation de l'une de règles du graphe permet de visualiser dans une fenêtre (76) le détail des variables et paramètres de la règle.

**Module de visualisation d'une règle**

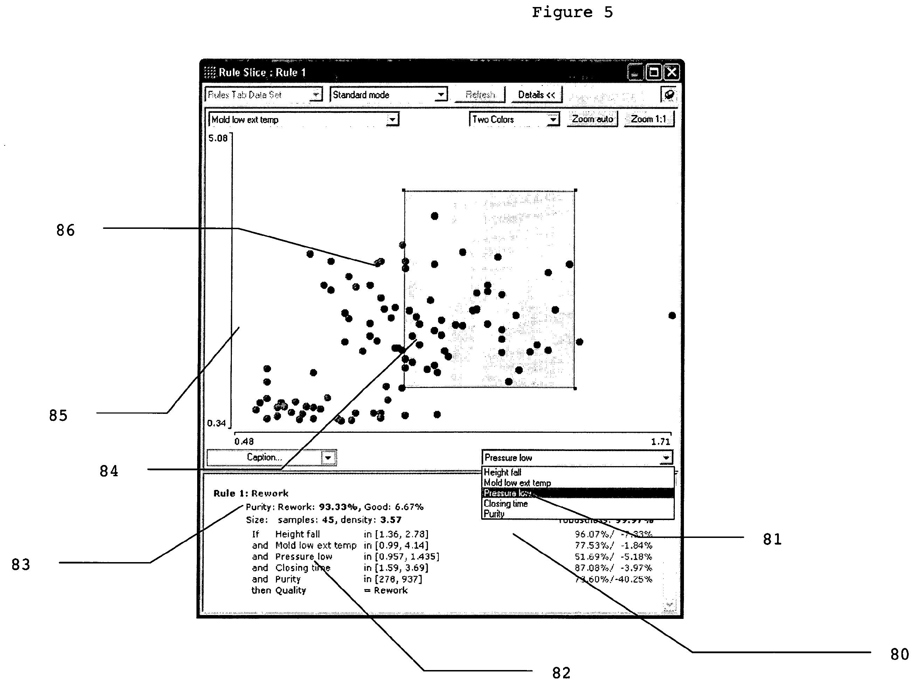

Ce module (8) permet d'afficher et de manipuler une représentation graphique d'une règle. La figure 5 représente une copie d'écran d'un exemple de mise en oeuvre de ce module. La règle est représentée sous forme d'une projection de l'hypercube de points sur deux variables choisies par l'utilisateur. Ces variables sont choisies au moyen d'une liste déroulante (80). L'hypercube projeté est matérialisé sous la forme d'un rectangle plein dont le fond est coloré (81). Les points sont représentés par de petits disques (par exemple, 83 à 86) avec des codes couleurs correspondant à la valeur de la variable de sortie. Les contours de l'hypercube peuvent être modifiés, et dans ce cas la règle est réévaluée dynamiquement. Les indicateurs de qualité sont également recalculés en temps réel et sont présentés dans une sous-fenêtre (82).

**Module optionnel de préparation des données**

Une étape préalable peut être prévue. Elle concerne la préparation des données expérimentales, consistant à discrétiser des données continues par regroupement en classes discrètes, ou encore à filtrer les données expérimentales en éliminant automatiquement ou manuellement certains points atypiques, ou non pertinents, ou encore de sélectionner un échantillon représentatif de points parmi un ensemble plus vaste de données expérimentales.

**Revendications**

1. Procédé implémenté par ordinateur d'édition d'un modèle explicatif d'analyse de réglage d'une chaîne de production, comportant :

**EP 1 574 990 B1**

• une étape de production du modèle explicatif sous la forme d'un ensemble de règles, lesdites règles étant représentées par :
• des combinaisons logiques de prémisses élémentaires, chaque prémisse élémentaire consistant en une restriction du domaine d'une variable
• et une combinaison logique de conclusions élémentaires, chaque conclusion élémentaire consistant également en une restriction du domaine d'une variable,
• le procédé comportant en outre une étape de modification d'une partie au moins des règles initiales pour déterminer un nouveau modèle explicatif **caractérisé en ce que** l'étape de modification de règles consiste :
• à modifier les restrictions de domaine desdites variables
• et à calculer les indicateurs de qualité de la règle par application du jeu de règles modifié sur une source de données appelée base d'exemples. et **en ce que** lesdits indicateurs de qualité sont constitués par une combinaison de plusieurs indicateurs élémentaires de qualité parmi l'ensemble suivant ;
• indicateur de taille de règle : caractérise le nombre d'exemples de la base d'exemples qui vérifient les prémisses de la règle
• indicateur de volume de règle : caractérise le volume du sous-espace support de la règle
• indicateur de pureté de règle : caractérise la proportion parmi les exemples qui vérifient les prémisses de la règle, de ceux qui vérifient aussi ses conclusions
• indicateur de robustesse : caractérise la résistance de la règle aux changements.

2. Procédé d'édition d'un modèle explicatif selon l'une quelconque des revendications précédentes, **caractérisé en ce que** lesdits indicateurs de qualité sont définis par l'utilisateur au moyen d'une interface graphique.

3. Procédé d'édition d'un modèle explicatif selon l'une quelconque des revendications précédentes, **caractérisé en ce qu'**il comporte une opération d'amélioration d'une règle consistant à maximiser un ou plusieurs indicateurs de qualité par la détermination optimale du domaine de variation d'une des variables des prémisses de ladite règle.

4. Procédé d'édition d'un modèle explicatif selon l'une quelconque des revendications précédentes, **caractérisé en ce qu'**il comporte une opération d'amélioration d'une règle consistant à maximiser un ou plusieurs indicateurs de qualité par la détermination optimale du domaine de variation des variables des prémisses de ladite règle.

5. Procédé d'édition d'un modèle explicatif selon l'une quelconque des revendications précédentes, **caractérisé en ce qu'**il comporte une opération d'amélioration d'une règle consistant à ajouter au moins une prémisse additionnelle dans le but de maximiser un ou plusieurs indicateurs de qualité par la détermination optimale du domaine de variation des variables des prémisses de ladite règle.

6. Procédé d'édition d'un modèle explicatif selon l'une quelconque des revendications précédentes, **caractérisé en ce qu'**il comporte une opération d'amélioration d'une règle consistant à supprimer au moins une prémisse de ladite règle dans le but de maximiser un ou plusieurs indicateurs de qualité par la détermination optimale du domaine de variation des variables des prémisses de ladite règle.

7. Procédé d'édition d'un modèle explicatif selon l'une quelconque des revendications précédentes, **caractérisé en ce qu'**il comporte une étape de visualisation d'une représentation graphique du domaine de variation des variables, et de symboles graphiques représentatifs des données de la source de référence et du résultat de l'application de la règle à la base d'exemples, et une étape de modification des domaines des variables par positionnement graphique de marqueurs commandés par une action sur un périphérique de pointage.

8. Procédé d'édition d'un modèle explicatif selon la revendication 7, **caractérisé en ce qu'**il comporte en outre une étape de :

• recalcul en temps réel d'au moins un indicateur de qualité
• et de visualisation graphique dudit indicateur de qualité.

9. Procédé d'édition d'un modèle explicatif selon l'une quelconque des revendications précédentes, **caractérisé en ce qu'**il comporte une étape de visualisation d'une représentation graphique du domaine de l'espace constitué par la projection des indicateurs de qualité, et de positionnement dans ledit espace de symboles graphiques représentatifs des règles en fonction des indicateurs correspondant à chacune des règles.

10. Procédé d'édition d'un modèle explicatif selon l'une quelconque des revendications **caractérisé en ce qu'**il comporte en outre des moyens de sélection et de visualisation d'une desdites règles à l'aide d'un périphérique de pointage.

**11.** Procédé d'édition d'un modèle explicatif selon l'une quelconque des revendications précédentes, **caractérisé en ce qu'**il comporte en outre une étape de construction d'une règle supplémentaire par la représentation graphique d'un ensemble de règles et de calcul d'une règle supplémentaire résultante d'une combinaison ensembliste de plusieurs règles.

**12.** Procédé d'édition d'un modèle explicatif selon la revendication 11, **caractérisé en ce que** la sélection de deux règles à combiner comporte une opération de représentation graphique des règles et des valeurs des indicateurs de qualité correspondant à la combinaison de chaque couple de règles.

**13.** Procédé d'édition d'un modèle explicatif selon la revendication 12, **caractérisé en ce que** l'étape de construction des règles consiste à élaborer l'ensemble des règles par apprentissage sur tout ou partie de la base d'exemples, en tenant compte de contraintes exprimées sur un ou plusieurs indicateurs de qualité et de validité.

**14.** Procédé d'édition d'un modèle explicatif selon la revendication 13, **caractérisé en ce que** les règles élaborées portent sur certaines variables seulement parmi l'ensemble des variables possibles.

**15.** Procédé d'édition d'un modèle explicatif selon la revendication 13, **caractérisé en ce que** les règles élaborées prennent en compte des contraintes exprimées sur les domaines de variation des variables.

**16.** Procédé d'édition d'un modèle explicatif selon la revendication 13, **caractérisé en ce que** les règles élaborées optimisent un ou plusieurs indicateurs de qualité et de validité.

**17.** Procédé d'édition d'un modèle explicatif selon l'une quelconque des revendications précédentes, **caractérisé en ce que** les domaines de variation des variables apparaissant en prémisse d'une règle sont visualisés sous forme d'histogrammes.

**18.** Procédé d'édition d'un modèle explicatif selon la revendication 17, **caractérisé en ce que** les domaines de variation des variables apparaissant en prémisse d'une règle sont modifiables par action du périphérique de pointage sur lesdits histogrammes.

**Patentansprüche**

**1.** Durch einen Computer implementiertes Verfahren zur Bearbeitung eines Erklärungsmodells einer Einstellungsanalyse einer Produktionsreihe, das aufweist:

   • einen Schritt der Bildung des Erklärungsmodells in der Form eines Regelwerks, wobei die Regeln dargestellt werden durch:
   • logische Verknüpfungen von grundlegenden Prämissen, wobei jede grundlegende Prämisse aus einer Einschränkung des Bereichs einer Variablen besteht
   • und eine logische Verknüpfung von grundlegenden Schlussfolgerungen besteht, wobei jede grundlegende Schlussfolgerung ebenfalls aus einer Einschränkung des Bereichs einer Variablen besteht,
   • wobei das Verfahren außerdem einen Änderungsschritt eines Teils mindestens der Anfangsregeln aufweist, um ein neues Erklärungsmodell zu bestimmen, **dadurch gekennzeichnet, dass** der Änderungsschritt der Regeln darin besteht:
   • die Einschränkungen des Bereichs der Variablen zu verändern
   • und die Qualitätsindikatoren der Regel durch Anwendung des veränderten Regelsatzes auf eine als Datenquelle bestimmte Beispielbasis zu berechnen.

   und dass die Qualitätsindikatoren durch eine Verknüpfung von mehreren elementaren Qualitätsindikatoren aus der folgenden Gruppe gebildet werden;

   • Größenindikator der Regel: kennzeichnet die Anzahl der Beispiele der Beispielbasis, die die Prämissen der Regel verifizieren
   • Volumenindikator der Regel: kennzeichnet das Volumen des Trägerteilraums der Regel
   • Reinheitsindikator der Regel: kennzeichnet das Verhältnis unter den Beispielen, die die Prämissen der Regel verifizieren, von denen die auch ihre Schlussfolgerungen verifizieren
• Robustheitsindikator: kennzeichnet den Widerstand der Regel gegen Änderungen.

2. Verfahren zur Bearbeitung eines Erklärungsmodells nach einem der vorhergehenden Ansprüche, **dadurch gekennzeichnet, dass** die Qualitätsindikatoren durch den Benutzer mittels einer graphischen Schnittstelle definiert werden.

3. Verfahren zur Bearbeitung eines Erklärungsmodells nach einem der vorhergehenden Ansprüche, **dadurch gekennzeichnet, dass** es eine Verbesserungsoperation einer Regel aufweist, die darin besteht, einen oder mehrere Qualitätsindikatoren durch die optimale Bestimmung des Variationsbereichs einer der Variablen der Prämissen der Regel zu maximieren.

4. Verfahren zur Bearbeitung eines Erklärungsmodells nach einem der vorhergehenden Ansprüche, **dadurch gekennzeichnet, dass** es eine Verbesserungsoperation einer Regel aufweist, die darin besteht, einen oder mehrere Qualitätsindikatoren durch die optimale Bestimmung des Variationsbereichs der Variablen der Prämissen der Regel zu maximieren.

5. Verfahren zur Bearbeitung eines Erklärungsmodells nach einem der vorhergehenden Ansprüche, **dadurch gekennzeichnet, dass** es eine Verbesserungsoperation einer Regel aufweist, die darin besteht, um mindestens eine zusätzliche Prämisse mit dem Ziel hinzuzufügen, einen oder mehrere Qualitätsindikatoren durch die optimale Bestimmung des Variationsbereichs der Variablen der Prämissen der Regel zu maximieren.

6. Verfahren zur Bearbeitung eines Erklärungsmodells nach einem der vorhergehenden Ansprüche, **dadurch gekennzeichnet, dass** es eine Verbesserungsoperation einer Regel aufweist, die darin besteht, mindestens eine Prämisse der Regel mit dem Ziel zu löschen, einen oder mehrere Qualitätsindikatoren durch die optimale Bestimmung des Variationsbereichs der Variablen der Prämissen der Regel zu maximieren.

7. Verfahren zur Bearbeitung eines Erklärungsmodells nach einem der vorhergehenden Ansprüche, **dadurch gekennzeichnet, dass** es einen Schritt der Sichtbarmachung einer graphischen Darstellung des Variationsbereichs der Variablen und von für die Daten der Bezugsquelle und das Ergebniß der Anwendung der Regel auf der Beispielbasis repräsentativen graphischen Zeichen und einen Änderungsschritt der Bereiche der Variablen durch graphische Positionierung von durch Einwirkung auf ein Zeigegerät gesteuerten Markierungen aufweist.

8. Verfahren zur Bearbeitung eines Erklärungsmodells nach Anspruch 7, **dadurch gekennzeichnet, dass** es außerdem einen Schritt aufweist:

   • der Neuberechnung von mindestens einem Qualitätsindikator in Echtzeit
   • und der graphischen Sichtbarmachung des Qualitätsindikators.

9. Verfahren zur Bearbeitung eines Erklärungsmodells nach einem der vorhergehenden Ansprüche, **dadurch gekennzeichnet, dass** es einen Schritt der Sichtbarmachung einer graphischen Darstellung des durch die Projektion der Qualitäts- und Positionierungsindikatoren gebildeten Raumbereichs in dem Raum von Graphikzeichen, die für die Regeln repräsentativ sind im Verhältnis zu den Indikatoren, die jeder der Regeln entsprechen.

10. Verfahren zur Bearbeitung eines Erklärungsmodells nach einem der vorhergehenden Ansprüche, **dadurch gekennzeichnet, dass** es außerdem Mittel zur Auswahl und Sichtbarmachung einer der Regeln mit Hilfe eines Zeigegeräts aufweist.

11. Verfahren zur Bearbeitung eines Erklärungsmodells nach einem der vorhergehenden Ansprüche, **dadurch gekennzeichnet, dass** es außerdem einen Schritt der Konstruktion einer zusätzlichen Regel durch die graphische Darstellung eines Regelwerks und Berechnung einer zusätzlichen Regel aufweist, die sich aus einer mengentheoretischen Verknüpfung von mehreren Regeln ergibt.

12. Verfahren zur Bearbeitung eines Erklärungsmodells nach Anspruch 11, **dadurch gekennzeichnet, dass** die Auswahl von zwei zu verknüpfenden Regeln eine Operation der graphischen Darstellung der Regeln und der Werte der Qualitätsindikatoren aufweist, die der Verknüpfung jedes Paars von Regeln entsprechen.

13. Verfahren zur Bearbeitung eines Erklärungsmodells nach Anspruch 12, **dadurch gekennzeichnet, dass** der Schritt der Konstruktion der Regeln darin besteht, das Regelwerk durch Lernen der gesamten Beispielbasis oder eines Teils davon, der unter Berücksichtigung der auf einen oder mehrere Indikatoren der Qualität und der Gültigkeit ausgedrückten Einschränkungen auszuarbeiten.

14. Verfahren zur Bearbeitung eines Erklärungsmodells nach Anspruch 13, **dadurch gekennzeichnet, dass** die erarbeiteten Regeln sich ausschließlich auf bestimmte Variablen aus der Gesamtheit der möglichen Variablen richten.

15. Verfahren zur Bearbeitung eines Erklärungsmodells nach Anspruch 13, **dadurch gekennzeichnet, dass** die erarbeiteten Regeln auf die Variationsbereiche der Variablen ausgedrückte Einschränkungen berücksichtigen.

16. Verfahren zur Bearbeitung eines Erklärungsmodells nach Anspruch 13, **dadurch gekennzeichnet, dass** die erarbeiteten Regeln einen oder mehrere Indikatoren für Qualität und Gültigkeit optimieren.

17. Verfahren zur Bearbeitung eines Erklärungsmodells nach einem der vorhergehenden Ansprüche, **dadurch gekennzeichnet, dass** die Variationsbereiche der Variablen, die als Prämisse einer Regel erscheinen, in Form von Histogrammen sichtbar gemacht werden.

18. Verfahren zur Bearbeitung eines Erklärungsmodells nach Anspruch 17, **dadurch gekennzeichnet, dass** die Variationsbereiche der Variablen, die als Prämisse einer Regel erscheinen, durch Einwirkung des Zeigegeräts auf die Histogramme änderbar sind.

## Claims

1. Computer-implemented method for editing an explanatory model for analysing the adjustment of a production line comprising:

   • a step of producing the explanatory model in the form of a set of rules, the rules being represented by:
   • logical combinations of elementary premises, each elementary premise consisting of a restriction of the field of a variable,
   • and a logical combination of elementary conclusions, each elementary conclusion also consisting of a restriction of the field of a variable,
   • the method further comprising a step for modifying at least a portion of the initial rules in order to determine a new explanatory model, **characterised in that** the step of modifying the rules consists of:
   • modifying the restriction of the field of said variables,
   • and calculating the quality indicators for the rule by applying the modified set of rules to a data source called the examples basis,

   and **in that**
   the quality indicators are composed of a combination of several elementary quality indicators from the following set;

   • rule size indicator: characterises the number of examples of the examples basis which check the premises of the rule,
   • rule volume indicator: characterises the volume of the rule support sub-space,
   • rule purity indicator: characterises the proportion among the samples which check the premises of the rule of those which also check its conclusions,
   • strength indicator: characterises the resistance of the rule to changes.

2. Method for editing an explanatory model according to the preceding claim, **characterised in that** the quality indicators are defined by the user by means of a graphical interface.

3. Method for editing an explanatory model according to any one of the preceding claims, **characterised in that** it comprises an operation for improving a rule consisting of maximising one or more quality indicators by the optimal determination of the field of variation of one of the variables of the premises of said rule.

4. Method for editing an explanatory model according to any one of the preceding claims, **characterised in that** it comprises an operation for improving a rule consisting of maximising one or more quality indicators by the optimal determination of the field of variation of the variables of the premises of the rule.

5. Method for editing an explanatory model according to any one of the preceding claims, **characterised in that** it comprises an operation for improving a rule consisting of adding at least an additional premise in order to maximise one or more quality indicators by the optimal determination of the field of variation of the variables of the premises of said rule.

6. Method for editing an explanatory model according to any one of the preceding claims, **characterised in that** it comprises an operation for improving a rule consisting of eliminating at least one premise of said rule in order to maximise one or more quality indicators by the optimal determination of the field of variation of the variables of the premises of said rule.

7. Method for editing an explanatory model according to any one of the preceding claims, **characterised in that** it comprises a step of visualization of a graphical representation of the field of variation of the variables and graphical symbols representative of the data of the reference source and the result of the application of the rule to the examples basis and a step of modification for the field of the variables by graphical positioning of markers commanded by actuation on a peripheral pointing device.

8. Method for editing an explanatory model according to claim 7, **characterised in that** it further comprises a step of:

   • recalculation in real time of at least one quality indicator,
   • and graphical visualization of said quality indicator.

9. Method for editing an explanatory model according to any one of the preceding claims, **characterised in that** it comprises a visualization step of a graphical representation of the field of the space composed by the projection of the quality and positioning indicators in said space of graphical symbols representative of the rules according to the indicators corresponding to each of the rules.

10. Method for editing an explanatory model according to any one of the preceding claims, **characterised in that** it further comprises means of selection and visualization of one of said rules with the aid of a peripheral pointing device.

11. Method for editing an explanatory model according to any one of the preceding claims, **characterised in that** it further comprises a step for constructing an additional rule by the graphical representation of a set of rules and calculating an additional rule resulting from a uniting combination of several rules.

12. Method for editing an explanatory model according to claim 11, **characterised in that** the selection of two rules to be combined comprises an operation of graphical representation of the rules and the values of the quality indicators corresponding to the combination of each pair of rules.

13. Method for editing an explanatory model according to claim 12, **characterised in that** the step for constructing the rules consists of drawing up the set of rules by learning all or part of the examples basis, taking account of the constraints expressed on one or more indicators of quality and validity.

14. Method for editing an explanatory model according to claim 13, **characterised in that** the rules drawn up bear solely on certain variables from the entire set of variables possible.

15. Method for editing an explanatory model according to claim 13, **characterised in that** the drawn up rules take into account the constraints expressed on the fields of variation of the variables.

16. Method for editing an explanatory model according to claim 13, **characterised in that** the rules drawn up optimise one or more quality and validity indicators.

17. Method for editing an explanatory model according to any one of the preceding claims, **characterised in that** the fields of variation of the variables appearing as a premise of a rule are viewed in the form of histograms.

18. Method for editing an explanatory model according to claim 17, **characterised in that** the fields of variation of the variables appearing as a premise of a rule can be modified by actuating the peripheral pointing device on said histograms.

**Figure 1**

# Figure 2 : Détermination automatique de la granularité pseudo code

| Variable | Type | Description |
|---|---|---|
| classes | list | Classes distinctes sur la base d'apprentissage (*globale*). |
| usePerClassPurity | bool | Flag d'utilisation de la pureté par classe (*globale*). |
| bCSToll | double | Paramètre de limite du *basis construction success* (*globale*). |

perBSNbIterations    unsigned      Paramètre de nombre d'essais par valeur de *basisSize* (*globale*).

pcBasisSize    unsigned      Redéfinition de *basisSize* par classe, évaluée dans la préparation de l'algorithme (*globale*).

pcMaxBasisSize    unsigned Valeur maximale de *basisSize* pour chaque classe : c'est le nombre d'instances de la classe (*globale*).

pcImpurity    unsigned      Redéfinition de *impurity* par classe (*globale*).

pcNbIterations    unsigned Nombre d'itérations effectuées pour chaque classe (*globale*).

pcNbGoodBases unsigned      Nombre de bases fertiles trouvées pour chaque classe (*globale*).

```
Algorithm Ctau28a : :evaluateBasisSize
1.
2. (double) nbMinSuccess this.perBSNbIterations * this.bCSToll
3. (double) nbMinFailure this.perBSNbIterations * (1 - this.bCSToll)
4.
5. /* Evaluate BCS for each class */
6. for cl 0 to this.classes.size()
7.    do
8.        (list) instances this.learningSet.getInstances(classes[cl]) /* récupération des
exemples de la classe cl */
9.        (unsigned) limInf 2
10.       (unsigned) limSup this.pcBasisSize[classes[cl]]
11.
12.    while limInf < limSup
13.    do (unsigned) nbGoodBases 0
14.       (unsigned) nbWrongBases 0
15.       (int) res 0
16.
17. /* Evaluate BCS for current basis size value */
18.        for i 0 to this.perBSNbIterations
19.        do
20.          if this.testOneBasis(this.pcBasisSize[classes[cl]], 0, instances)
21.            then ++nbGoodBases
22.            else ++nbWrongBases
23.
24.          if (nbGoodBases == nbMinSuccess) and (nbWrongBases == nbMinFailure)
25.            then res 0
26.            break
27.          if (nbGoodBases >= nbMinSuccess)
28.            then res 1
29.            break
30.          if (nbWrongBases >= nbMinFailure)
31.            then res -1
32.            break
33.
34. /* if good BCS, increase basis size */
35.        if res > 0
36.            then if this.pcBasisSize[this.classes[cl]] == limSup
```

Figure : 2 (suite)

```
37.              then break
38.              limInf this.pcBasisSize[this.classes[cl]]
39.              (unsigned) newBasisSize = this.pcBasisSize[this.classes[cl]] + (1 + limSup
- limInf) / 2
40.              this.pcBasisSize[this.classes[cl]] newBasisSize
41.
42. /* if wrong BCS, decrease basis size */
43.       if res < 0
44.          then if this.pcBasisSize[this.classes[cl]] == limInf
45.             then break
46.          limSup this.pcBasisSize[this.classes[cl]] - 1
47.          (unsigned) newBasisSize = this.pcBasisSize[this.classes[cl]] - (limSup -
limInf) / 2 +1
48.          this.pcBasisSize[this.classes[cl]] newBasisSize
49.
50. /* exactly good BCS */
51.       if res == 0
52.          then break
53.
```

La fonction testOneBasis a pour rôle de construire aléatoirement une base de généralisation parmi les instances données,
et de tester sa validité en regard du critère d'impureté donné.

17

Figure 3

Rule Editor

Rules  Edit  Tools  Help

Fixed values   Rule slice   Complete   Optimize

Rule 5 [class: Scrap · purity: 90.91% · size: 22 · int.: 63.57% · robust.: 99.28% · comp.: 4] (modified)

Rules Tab Data Set

Rule 5: Scrap

Purity: Scrap : **90.91%**, Rework : 9.09%, Good : 0.00%

Size:  samples: **22**, volume: **2.66%**, density: **4.64**

Pur    Size

interest: **63.57%**

robustness: **99.28%**   Rob    Int

If      Purity          in [ 415    , 679    ]          40.45%/ −0.91%

and     Viscosity       in [ 21     , 30     ]          33.71%/  3.38%

and     Pressure middle in [ 3.85   , 13     ]          63.48%/−13.99%

and     Pressure low    in [ 0.48   , 0.96   ]          50.00%/  0.00%

then    Quality         =  Scrap

Automatic   Refresh                    OK     Cancel    Apply

51  52  53  54  55  56  45  46  57
20  21  22  23  24
41  42  43  44  48  38
31  32  33  34

EP 1 574 990 B1

18

Figure 4

EP 1 574 990 B1

Figure 5

**EP 1 574 990 B1**

**Documents brevets cités dans la description**

- WO 5692107 A